# EUROPEAN PATENT APPLICATION

(11) **EP 3 572 940 A1**
(43) Date of publication of application: **27.11.2019**
(21) Application number: 17896523.2
(22) Date of filing: 12.10.2017
(51) Int. Cl.: G06F 9/50

(54) **METHOD AND DEVICE FOR SCHEDULING VCPU THREAD**

(30) Priority: 20.02.2017 CN 201710090257
(71) Applicant: Huawei Technologies Co., Ltd., Longgang District Shenzhen, Guangdong 518129 (CN)
(72) Inventor: ZHU, Yijun, Shenzhen Guangdong 518129 (CN); ZHAO, Shenglong, Shenzhen Guangdong 518129 (CN)
(74) Representative: Gill Jennings & Every LLP
(86) International application number: PCT/CN2017/105871
(87) International publication number: WO 2018/149157

(57) **Abstract**

Embodiments of the present invention relate to the field of communications technologies and provide a VCPU thread scheduling method and apparatus, so that a VCPU thread that can operate normally is created for a virtual machine in a heterogeneous core system, improving running efficiency of the virtual machine. The method includes: obtaining a performance indicator required by a VCPU thread in a to-be-created VM, where the performance indicator is used to indicate a specification feature required by the VM; creating the VCPU thread according to the performance indicator required by the VCPU thread; determining, from physical CPU information, a target physical CPU group that satisfies the performance indicator of the VCPU thread, where the physical CPU information includes at least one physical CPU group, and each physical CPU group includes at least one physical CPU with a same performance indicator; and running the VCPU thread on at least one physical CPU in the target physical CPU group.

## Description

This application claims priority to Chinese Patent Application No. 2017100902574, filed with the Chinese Patent Office on February 20, 2017 and entitled "VCPU THREAD SCHEDULING METHOD AND APPARATUS", which is incorporated herein by reference in its entirety.

### TECHNICAL FIELD

Embodiments of the present invention relate to the field of communications technologies, and in particular, to a VCPU thread scheduling method and apparatus.

### BACKGROUND

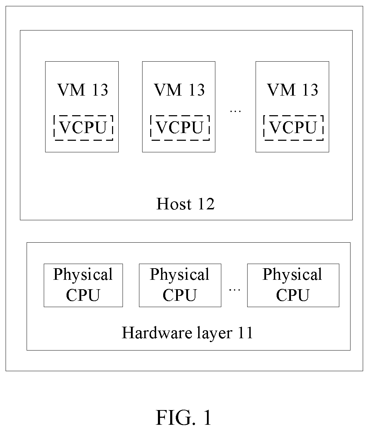

Referring to FIG. 1, FIG. 1 is a schematic diagram of an architecture for running a virtual machine (VM, Virtual Machine). The architecture includes a hardware layer 11, a host (host) 12 running on the hardware layer 11, and at least one virtual machine 13 running on the host 12.

The hardware layer 11 may include a plurality of physical CPUs. A VCPU (Virtual CPU, virtual CPU) in each virtual machine 13 is actually a VCPU thread that can be switched and scheduled to different physical CPUs by the host 12 according to a rule. A type of a VCPU thread needs to be consistent with a type of a physical CPU on which the VCPU thread resides. Otherwise, a virtual machine running the VCPU thread cannot operate normally.

In a homogeneous core system, the hardware layer 11 includes one or more physical CPUs of a same type. Therefore, provided that a type of a VCPU thread is the same as a type of any physical CPU, a virtual machine running the VCPU thread can operate normally. In a heterogeneous core system, however, the hardware layer 11 includes physical CPUs of different types. To make a virtual machine operate normally, physical CPUs with a same instruction set (that is, a set of instructions supported by the physical CPUs) may be classified into a group. Subsequently, when creating a VCPU thread, the host 12 may bind a corresponding group of physical CPUs to a VCPU thread according to a type of the VCPU thread. Subsequently, the VCPU thread may be scheduled by the host 12 to run on any physical CPU in the group of physical CPUs.

For example, a physical CPU group bound by the host 12 to a VCPU thread 1 is a group 1, and the group 1 includes a physical CPU 1 and a physical CPU 2. The host 12 may subsequently schedule the VCPU thread 1 to run on the physical CPU 1 or the physical CPU 2. However, although the physical CPU 1 and the physical CPU 2 have a same instruction set, a type of the physical CPU 1 or a type of the physical CPU 2 may be different from a type of the VCPU thread 1. Therefore, the VCPU thread 1 cannot run normally on the physical CPU 2, decreasing running efficiency of a virtual machine.

### SUMMARY

Embodiments of the present invention provide a VCPU thread scheduling method and apparatus to create a VCPU thread that can operate normally for a virtual machine in a heterogeneous core system, improving running efficiency of the virtual machine.

To achieve the foregoing objective, the following technical solutions are used in the embodiments of the present invention.

According to a first aspect, an embodiment of the present invention provides a VCPU thread scheduling method, including: obtaining a performance indicator required by a VCPU thread in a to-be-created VM, where the performance indicator is used to indicate a specification feature required by the VM; creating the VCPU thread according to the performance indicator required by the VCPU thread; determining, from physical CPU information, a target physical CPU group that satisfies the performance indicator of the VCPU thread, where the physical CPU information includes at least one physical CPU group, and each physical CPU group includes at least one physical CPU with a same performance indicator; and running the VCPU thread on at least one physical CPU in the target physical CPU group.

In this way, the VCPU thread can be scheduled to different CPUs in the target physical CPU group. A performance indicator of each physical CPU in the target physical CPU group is the same as the performance indicator of the VCPU thread. Therefore, this can avoid a problem that a VM cannot operate normally because a performance indicator of a physical CPU cannot satisfy a performance indicator of a VCPU thread, thereby improving running efficiency of the virtual machine.

In a possible implementation, the method further includes: obtaining performance indicators (for example, a main frequency, a cache capacity, or another specification feature) of N (N > 1) physical CPUs; classifying, according to the performance indicators of the N physical CPUs, the N physical CPUs into at least one physical CPU group. In this way, a correspondence between each physical CPU group and a performance indicator of a physical CPU in the physical CPU group can be stored as the physical CPU information in the host.

In a possible implementation, the obtaining a performance indicator required by a VCPU thread in a to-be-created virtual machine includes: creating a QEMU main thread of the VM, and using a performance indicator of a physical CPU running the QEMU main thread as the performance indicator required by the VCPU thread.

Alternatively, the obtaining a performance indicator required by a VCPU thread in a to-be-created virtual machine includes: obtaining preset virtual machine configuration information, where the virtual machine configuration information includes the performance indicator required by the VCPU.

In a foregoing possible implementation, a plurality of VCPUs with different performance indicators may be configured for the VM. That is, when a physical host is a heterogeneous core system, a VM with a heterogeneous core system may be further deployed on the physical host.

In a possible implementation, the performance indicator required by the VCPU is model information of the VCPU, and the performance indicator of the physical CPU is model information of the physical CPU.

According to a second aspect, an embodiment of the present invention provides a host, including: an obtaining unit, configured to obtain a performance indicator required by a VCPU thread in a to-be-created VM, where the performance indicator is used to indicate a specification feature of a VCPU required by the VM; a creating unit, configured to create the VCPU thread according to the performance indicator required by the VCPU thread; a determining unit, configured to determine, from physical CPU information, a target physical CPU group that satisfies the performance indicator of the VCPU thread, where the physical CPU information includes at least one physical CPU group, and each physical CPU group includes at least one physical CPU with a same performance indicator; and a running unit, configured to run the VCPU thread on at least one physical CPU in the target physical CPU group.

In a possible implementation, the host further includes a classifying unit, where the obtaining unit is further configured to obtain performance indicators of N physical CPUs, where N > 1; the classifying unit is configured to classify, according to the performance indicators of the N physical CPUs, physical CPUs with same performance indicators into one physical CPU group, to obtain at least one physical CPU group; and a determining unit, specifically configured to use, as the physical CPU information, a correspondence between each physical CPU group of the at least one physical CPU group and a performance indicator indicated by the physical CPU group.

In a possible implementation, the obtaining unit is specifically configured to create a virtual operating system emulator QEMU main thread of the VM, and use a performance indicator of a physical CPU running the QEMU main thread as the performance indicator required by the VCPU thread.

In a possible implementation, the obtaining unit is specifically configured to obtain preset virtual machine configuration information, where the virtual machine configuration information includes the performance indicator required by the VCPU.

According to a third aspect, an embodiment of the present invention provides a physical host, including: a hardware layer, a host host running on the hardware layer, and at least one virtual machine VM running on the host. The hardware layer includes N physical CPUs, where N > 1. The host is configured to obtain a performance indicator required by a VCPU thread in a to-be-created VM, where the performance indicator is used to indicate a specification feature of the VCPU required by the VM; create the VCPU thread according to the performance indicator required by the VCPU thread; determine, from physical CPU information, a target physical CPU group that satisfies the performance indicator of the VCPU thread, where the physical CPU information includes at least one physical CPU group, and each physical CPU group includes at least one physical CPU with a same performance indicator; and run the VCPU thread on at least one physical CPU in the target physical CPU group.

In a possible implementation, the host is further configured to obtain performance indicators of N physical CPUs; classify, according to the performance indicators of the N physical CPUs, physical CPUs with same performance indicators into one physical CPU group, to obtain at least one physical CPU group; and use, as the physical CPU information, a correspondence between each physical CPU group of the at least one physical CPU group and a performance indicator indicated by the physical CPU group.

In a possible implementation, the host is specifically configured to create a QEMU main thread of the VM, and use a performance indicator of a physical CPU running the QEMU main thread as the performance indicator required by the VCPU thread.

In a possible implementation, the host is specifically configured to obtain preset virtual machine configuration information, where the virtual machine configuration information includes the performance indicator required by the VCPU.

According to a fourth aspect, an embodiment of the present invention provides a computer storage medium configured to store a computer software instruction used by the foregoing physical host. The computer software instruction includes a program designed for the physical host for executing the foregoing aspects.

According to a fifth aspect, an embodiment of the present invention provides a computer program. The computer program includes an instruction. When the computer program is executed by a computer, the computer can execute the VCPU thread scheduling method in any implementation of the foregoing first aspect.

In the present invention, names of the host and physical host constitute no limitation on the devices. In actual implementation, these devices may appear in other names. Provided that functions of the devices are similar to those in the present invention, the devices shall fall within the scope defined by the claims of the present invention and their equivalent technologies.

In addition, for a technical effect brought by any design manner in the second aspect to the fifth aspect, refer to a technical effect brought by different design manners in the first aspect. Details are not described herein again.

These aspects or other aspects of the present invention may be clearer in descriptions of the following embodiments.

### BRIEF DESCRIPTION OF DRAWINGS

FIG. 1 is a schematic diagram of an architecture for running a virtual machine in the prior art;
FIG. 2 is a schematic flowchart of a VCPU thread scheduling method according to an embodiment of the present invention;
FIG. 3 is a schematic principle diagram of a VCPU thread scheduling method according to an embodiment of the present invention;
FIG. 4 is a schematic structural diagram of a host according to an embodiment of the present invention;
FIG. 5 is a schematic structural diagram 1 of a physical host according to an embodiment of the present invention; and
FIG. 6 is a schematic structural diagram 2 of a physical host according to an embodiment of the present invention.

### DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of the present invention, unless otherwise provided, "multiple" means two or more than two.

For ease of understanding the embodiments of the present invention, some terms used in the descriptions of the embodiments of the present invention are first described herein.

Virtual machine (VM): One or more virtual computers may be simulated on a physical host by using VM software, and these VMs work in the same manner as real computers. An operating system and an application program may be installed on the VM. The VM may access a network resource. For an application program that runs on a VM, the VM operates like a real computer.

Hardware layer: a hardware platform for running a virtual environment. The hardware layer may include a plurality of hardware. For example, the hardware layer of a physical host may include N (N > 1) physical CPUs, and may further include a memory, a network adapter, a storage, a high-speed/low-speed input/output (I/O, Input/Output) device, and another device having a specific processing function.

Host (host): a management layer to manage and allocate a hardware resource, present a virtual hardware platform for a virtual machine, and schedule and isolate virtual machines. For example, a virtual machine monitor (VMM) may be disposed in a host. The virtual hardware platform provides various hardware resources for all virtual machines running on the virtual hardware platform. For example, the virtual hardware platform provides a virtual central processing unit (VCPU), a virtual memory, a virtual disk, a virtual network adapter, or the like.

One or more VCPUs may run in a VM. Each VCPU is actually a VCPU thread. The VM implements a VCPU function by scheduling a VCPU thread. The VCPU thread may be scheduled by a host according to a rule to run on any physical CPU on the hardware layer.

Embodiments of the present invention provide a VCPU thread scheduling method. Before a VM is deployed, a host may classify, based on performance indicators (for example, a main frequency, a cache capacity, or another specification feature) of N physical CPUs on the hardware layer, the N physical CPUs into at least one physical CPU group. Physical CPUs within each physical CPU group have same performance indicators.

The host may store, as the physical CPU information in the host, a correspondence between each physical CPU group and a performance indicator of a physical CPU in the physical CPU group.

Subsequently, when a VM is deployed, the host may first obtain a performance indicator required by a VCPU thread in the VM, where the performance indicator is used to indicate a specification feature of a VCPU required by the VM, such as a main frequency, a cache capacity, or another specification feature of the VCPU; then create a VCPU thread that satisfies the performance indicator; and then determine, according to the physical CPU information, a target physical CPU group that satisfies the performance indicator of the VCPU thread, and bind the VCPU thread to the target physical CPU group.

In this way, the host can schedule the VCPU thread to different CPUs in the target physical CPU group. A performance indicator of each physical CPU in the target physical CPU group is the same as the performance indicator of the VCPU thread. Therefore, this can avoid a problem that a VM cannot operate normally because a performance indicator of a physical CPU cannot satisfy a performance indicator of a VCPU thread, thereby improving running efficiency of the virtual machine.

For example, physical CPUs or VCPUs of different models are usually corresponding to different performance indicators. For example, a physical CPU of model A has a main frequency of 1.2 GHz and three registers, while a physical CPU of model B has a main frequency of 2.3 GHz and two registers. Therefore, a performance indicator of a physical CPU may be model information of the physical CPU, and a performance indicator of a VCPU thread may be specifically model information of the VCPU.

It may be understood that the embodiments of the present invention may be applied to a virtual machine platform such as Xen or KVM (Kernel-based Virtual Machine, kernel-based virtual machine). This is not limited in the embodiments of the present invention.

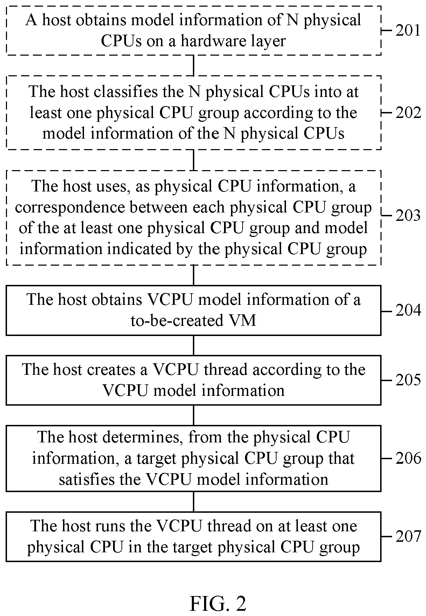

The following describes a VCPU thread scheduling method provided in an embodiment of the present invention in detail with reference to specific embodiments. The method may be executed by a host running on a physical host. As shown in FIG. 2, the method includes the following steps.

201. A host obtains model information of N physical CPUs on a hardware layer, where N > 1.

Specifically, after the host is created on the physical layer, a VMM may be loaded in the host. Then, the VMM obtains model information of N physical CPUs on the hardware layer.

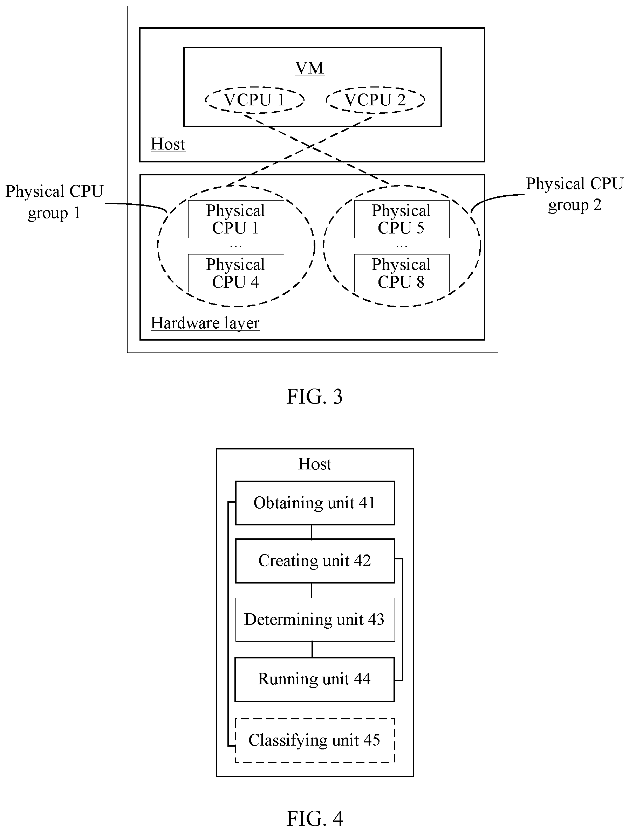

For example, as shown in FIG. 3, a hardware layer includes eight physical CPUs. The VMM may detect model information of each of the eight physical CPUs. Model information of a physical CPU 1 to a physical CPU 4 is Cortex-A53, and model information of a physical CPU 5 to a physical CPU 8 is Cortex-A57.

202. The host classifies the N physical CPUs into at least one physical CPU group according to the model information of the N physical CPUs.

203. The host uses, as physical CPU information, a correspondence between each physical CPU group of the at least one physical CPU group and model information indicated by the physical CPU group.

Specifically, in step 202, physical CPUs with same model information may be classified into one physical CPU group.

The eight physical CPUs shown in FIG. 3 are used as an example. The physical CPU 1 to physical CPU 4 with same model information may be classified into a physical CPU group 1, and the physical CPU 5 to physical CPU 8 with same model information may be classified into a physical CPU group 2.

In this case, the physical CPU group 1 is corresponding to Cortex-A53, and the physical CPU group 2 is corresponding to Cortex-A7.

Further, in step 203, as shown in Table 1, the host uses, as the physical CPU information, a correspondence between the physical CPU group 1 and Cortex-A53, and a correspondence between the physical CPU group 2 and Cortex-A57. Subsequently, the host may determine the physical CPU group that runs the VCPU thread according to the physical CPU information.

**Table 1**

| | |
|---|---|
| Physical CPU group 1 (including the physical CPU 1 to the physical CPU 4) | Cortex-A53 |
| Physical CPU group 2 (including the physical CPU 5 to the physical CPU 8) | Cortex-A57 |

204. The host obtains VCPU model information of a to-be-created VM.

In a possible implementation, the host may provide a function interface for a VM with a different VCPU model. In this way, a user may set virtual machine configuration information for the to-be-created VM, such as a VCPU model.

For example, in user-defined virtual machine configuration information, a quantity of VCPUs is set to 2, and a VCPU model is set to Cortex-A57 and Cortex-A53. In other words, the to-be-created VM needs to run two VCPUs. As shown in FIG. 3, one is a VCPU 1 of a model of Cortex-A57, and the other is a VCPU 2 of a model of Cortex-A53.

It can be learned that in this implementation, different models of VCPUs may be configured for a VM. That is, when a physical host is a heterogeneous core system, a VM of a heterogeneous core system may be further deployed on the physical host.

In another possible implementation, when a host obtains a VM deployment request, the host first creates a QEMU (virtual operating system emulator) main thread (main loop) for the VM. Then the created QEMU main thread obtains model information of the physical CPU where the QEMU main thread resides. For example, the model information of the physical CPU running the QEMU main thread is Cortex-A57. Then, the QEMU main thread may use the model information of the physical CPU running the QEMU main thread as the model information of the VCPU. That is, model information of the VCPU is Cortex-A57.

205. The host creates a VCPU thread according to the VCPU model information.

Specifically, the QEMU main thread running on the host may create a VCPU thread of a same model according to the VCPU model information.

For example, model information of a VCPU1 is Cortex-A57 and model information of a VCPU2 is Cortex-A53. Then the QEMU main thread may create two VCPU threads. One is a VCPU thread 1 of the VCPU1 corresponding to Cortex-A57, and the other is a VCPU thread 2 of the VCPU2 corresponding to Cortex-A53.

206. The host determines, from the physical CPU information, a target physical CPU group that satisfies the VCPU model information.

Specifically, the host may use a physical CPU group of model information same as the VCPU model information in the physical CPU information, as the target physical CPU group.

The eight physical CPUs shown in FIG. 3 are used as an example again. Model information of the physical CPU group 1 is Cortex-A53, and model information of the physical CPU group 2 is Cortex-A57. However, in step 203, model information of the VCPU1 is Cortex-A57, and model information of the VCPU2 is Cortex-A53. In this case, the physical CPU group 1 may be determined as a target physical CPU group of the VCPU2, and the physical CPU group 2 may be determined as a target physical CPU group of the VCPU1.

It should be noted that embodiments of the present invention do not limit a timing sequence of step 205 and step 206.

207. The host runs the VCPU thread on at least one physical CPU in the target physical CPU group.

For example, two VCPU threads are created in step 204. One is the VCPU thread 1 of the VCPU1 corresponding to Cortex-A57, and the other is the VCPU thread 2 of the VCPU2 corresponding to Cortex-A53. In step 205, the physical CPU group 1 is determined as the target physical CPU group of the VCPU2, and the physical CPU group 2 is determined as the target physical CPU group of the VCPU1.

In this case, the host may bind the VCPU thread 1 to the physical CPU group 2, and bind the VCPU thread 2 to the physical CPU group 1.

Subsequently, the VCPU thread 1 of the VCPU1 may run on at least one physical CPU of the physical CPU 5 to the physical CPU 8 in the physical CPU group 2, and the VCPU thread 2 of the VCPU2 may run on at least one physical CPU of the physical CPU 1 to the physical CPU 4 in the physical CPU group 1.

In this way, during running of a virtual machine, the host may schedule the VCPU thread 1 to run on any physical CPU in the physical CPU group 2, and schedule the VCPU thread 2 to run on any physical CPU in the physical CPU group 1, according to the foregoing binding relationship. Because a model of any physical CPU in the physical CPU group 2 is the same as the model of the VCPU1, that is, a performance indicator of any physical CPU in the physical CPU group 2 is the same as a performance indicator of the VCPU1, and a performance indicator of any physical CPU in the physical CPU group 1 is the same as a performance indicator of the VCPU2. Therefore, a performance indicator of a physical CPU always satisfies a VCPU, improving running efficiency of a virtual machine, and implementing deployment and running of a virtual machine in a heterogeneous core system.

The foregoing describes a solution provided in this embodiment of the present invention mainly from a perspective of interaction between network elements. It may be understood that, to implement the foregoing functions, the physical host and the host include corresponding hardware structures and/or software modules for executing the functions. A person of ordinary skill in the art should be easily aware that, the units and algorithm steps in each example described with reference to this embodiment disclosed in this specification may be implemented in a form of hardware or a combination of hardware and computer software in the present invention. Whether the functions are implemented by hardware or are implemented in a manner in which computer software drives hardware depends on a particular application and a design constraint condition of the technical solution. A person skilled in the art may use different methods to implement the described functions for each particular application, but it should not be considered that the implementation goes beyond the scope of the present invention.

In this embodiment of the present invention, function module division may be performed on the physical host, host, and the like according to the foregoing method examples, for example, function modules may be divided according to functions, or two or more functions may be integrated into one processing module. The integrated module may be implemented in a form of hardware, or may be implemented in a form of a software function module. It should be noted that module division in this embodiment of the present invention is an example and is merely logical function division, and may be other division in actual implementation.

When function modules are divided according to functions, FIG. 4 shows a possible schematic structural diagram of the host in the foregoing embodiment. The host includes an obtaining unit 41, a creating unit 42, a determining unit 43, a running unit 44, and a classifying unit 45.

The obtaining unit 41 is configured to support the host in executing step 201 and step 204 in FIG. 2; the creating unit 42 is configured to support the host in executing step 205 in FIG. 2, the determining unit 43 is configured to support the host in executing step 203 and step 206 in FIG. 2, the running unit 44 is configured to support the host in executing step 207 in FIG. 2, and the classifying unit 45 is configured to support the host in executing step 202 in FIG. 2. All related content of all steps performed in the method embodiment may be cited as function description of all corresponding function modules, and details are not described herein again.

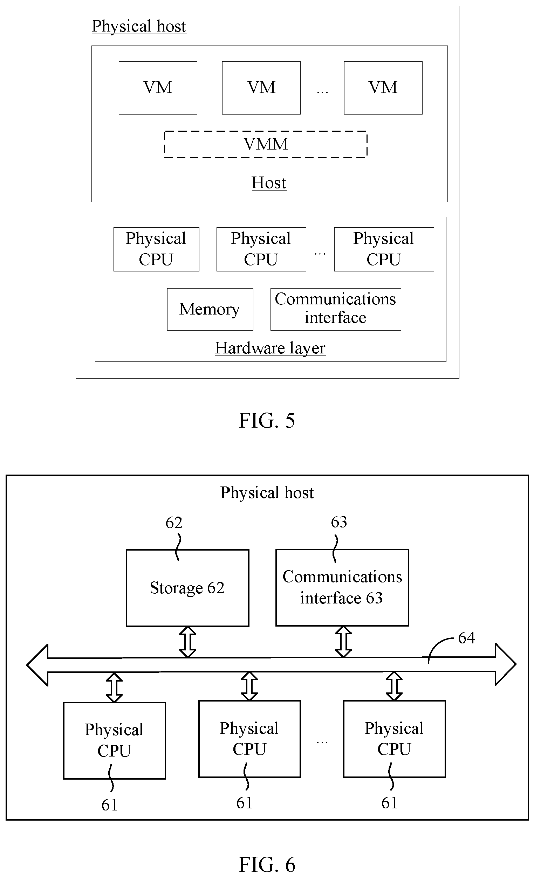

Further, an embodiment of the present invention provides a physical host. Referring to FIG. 5, the physical host includes a hardware layer, a host running on the hardware layer, and at least a virtual machine running on the host.

The hardware layer includes N physical CPUs. Optionally, the hardware layer may further include a memory, a communications interface, or another device.

The host may include a VMM on the physical host. The host may be configured to execute step 201 to step 207 in FIG. 2. All related content of all steps performed in the method embodiment may be cited as function description of all corresponding function modules, and details are not described herein again.

When an integrated unit is used, FIG. 6 shows a possible schematic structural diagram of the physical host in the foregoing embodiments.

The physical host includes N physical CPUs 61. Optionally, the physical host may further include a storage 62, a communications bus 63, and at least one communications bus 64 used to connect devices within the physical host to implement connection and communications among these devices.

The communications bus 64 may be an industry standard architecture (Industry Standard Architecture, ISA) bus, a peripheral device interaction (Peripheral Component, PCI) bus, an extended industry standard architecture (Extended Industry Standard Architecture, EISA) bus, or the like. The bus 64 may be classified into an address bus, a data bus, a control bus, and the like. For ease of representation, the bus in FIG. 6 is represented by using only one bold line, but it does not indicate that there is only one bus or only one type of bus.

The physical CPU 61 reads an instruction stored on the storage 62 to execute a related VCPU thread scheduling method in the foregoing step 201 to step 206.

Further, an embodiment of the present invention further provides a computer program. The computer program includes an instruction. When the computer program is executed by a computer, the computer can execute the related VCPU thread scheduling method in the foregoing step 201 to step 207.

Further, an embodiment of the present invention further provides a computer storage medium configured to store a computer software instruction used by the host. The computer software instruction includes any program designed for the host for executing the method embodiment.

Method or algorithm steps described in combination with the content disclosed in the present invention may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read only memory (Erasable Programmable ROM, EPROM), an electrically erasable programmable read only memory (Electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or part of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of this application. The storage medium includes: any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A VCPU thread scheduling method, comprising:
obtaining a performance indicator required by a virtual central processing unit VCPU thread in a to-be-created virtual machine VM, wherein the performance indicator is used to indicate a specification feature of a VCPU required by the VM;
creating the VCPU thread according to the performance indicator required by the VCPU thread;
determining, from physical CPU information, a target physical CPU group that satisfies the performance indicator of the VCPU thread, wherein the physical CPU information comprises at least one physical CPU group, and each physical CPU group comprises at least one physical CPU with a same performance indicator; and
running the VCPU thread on at least one physical CPU in the target physical CPU group.

2. The method according to claim 1, wherein before the determining, from physical CPU information, a target physical CPU group that satisfies the performance indicator of the VCPU thread, the method further comprises:
obtaining performance indicators of N physical CPUs, wherein N > 1;
classifying, according to the performance indicators of the N physical CPUs, physical CPUs with same performance indicators into one physical CPU group, to obtain at least one physical CPU group; and
using, as the physical CPU information, a correspondence between each physical CPU group in the at least one physical CPU group and a performance indicator indicated by the physical CPU group.

3. The method according to claim 1 or 2, wherein the obtaining a performance indicator required by a VCPU thread in a to-be-created virtual machine comprises:
creating a virtual operating system emulator QEMU main thread of the VM; and
using a performance indicator of a physical CPU running the QEMU main thread as the performance indicator required by the VCPU thread.

4. The method according to claim 1 or 2, wherein the obtaining a performance indicator required by a VCPU thread in a to-be-created virtual machine comprises:
obtaining preset virtual machine configuration information, wherein the virtual machine configuration information comprises the performance indicator required by the VCPU.

5. The method according to any one of claims 1 to 4, wherein the performance indicator required by the VCPU thread is model information of the VCPU, and the performance indicator of the physical CPU is model information of the physical CPU.

6. A host, comprising:
an obtaining unit, configured to obtain a performance indicator required by a virtual central processing unit VCPU thread in a to-be-created virtual machine VM, wherein the performance indicator is used to indicate a specification feature of the VCPU thread;
a creating unit, configured to create the VCPU thread according to the performance indicator required by the VCPU thread;
a determining unit, configured to determine, from physical CPU information, a target physical CPU group that satisfies the performance indicator of the VCPU thread, wherein the physical CPU information comprises at least one physical CPU group, and each physical CPU group comprises at least one physical CPU with a same performance indicator; and
a running unit, configured to run the VCPU thread on at least one physical CPU in the target physical CPU group.

7. The host according to claim 6, wherein the host further comprises a classifying unit, wherein
the obtaining unit is further configured to obtain performance indicators of N physical CPUs, wherein N > 1;
the classifying unit is configured to classify, according to the performance indicators of the N physical CPUs, physical CPUs with same performance indicators into one physical CPU group, to obtain at least one physical CPU group; and
the determining unit is specifically configured to use, as the physical CPU information, a correspondence between each physical CPU group of the at least one physical CPU group and a performance indicator of the physical CPU group.

8. The host according to claim 6 or 7, wherein
the obtaining unit is specifically configured to create a virtual operating system emulator QEMU main thread of the VM, and use a performance indicator of a physical CPU running the QEMU main thread as the performance indicator required by the VCPU thread.

9. The host according to claim 6 or 7, wherein
the obtaining unit is specifically configured to obtain preset virtual machine configuration information, wherein the virtual machine configuration information comprises the performance indicator required by the VCPU.

10. A physical host, wherein the physical host comprises a hardware layer, a host host running on the hardware layer, at least one virtual machine VM running on the host, and the hardware layer comprises N physical CPUs, wherein N > 1; and
the host is configured to obtain a performance indicator required by a VCPU thread in a to-be-created VM, wherein the performance indicator is used to indicate a specification feature of the VCPU thread; create the VCPU thread according to the performance indicator required by the VCPU thread; determine, from physical CPU information, a target physical CPU group that satisfies the performance indicator of the VCPU thread, wherein the physical CPU information comprises at least one physical CPU group, and each physical CPU group comprises at least one physical CPU with a same performance indicator; and run the VCPU thread on at least one physical CPU in the target physical CPU group.

11. The physical host according to claim 10, wherein the host is further configured to:
obtain performance indicators of N physical CPUs; classify, according to the performance indicators of the N physical CPUs, physical CPUs with same performance indicators into one physical CPU group, to obtain at least one physical CPU group; and use, as the physical CPU information, a correspondence between each physical CPU group of the at least one physical CPU group and a performance indicator indicated by the physical CPU group.

12. The physical host according to claim 10 or 11, wherein the host is specifically configured to:
create a virtual operating system emulator QEMU main thread of the VM; and use a performance indicator of a physical CPU running the QEMU main thread as the performance indicator required by the VCPU thread.

13. The physical host according to claim 10 or 11, wherein the host is specifically configured to:
obtain preset virtual machine configuration information, wherein the virtual machine configuration information comprises the performance indicator required by the VCPU.
